Europäisches Patentamt

European Patent Office

Office européen des brevets

(11) Publication number: **0 302 713 B1**

# EUROPEAN PATENT SPECIFICATION

(45) Date of publication of patent specification: **14.10.92**

(51) Int. Cl.⁵: **A23D 7/00**, A23D 9/00, A23D 7/02, A23D 9/02

(21) Application number: **88307168.0**

(22) Date of filing: **03.08.88**

(54) **Margarine and the like.**

(30) Priority: **04.08.87 GB 8718421**

(43) Date of publication of application:
**08.02.89 Bulletin 89/06**

(45) Publication of the grant of the patent:
**14.10.92 Bulletin 92/42**

(84) Designated Contracting States:
**AT BE CH DE ES FR GB GR IT LI NL SE**

(56) References cited:
**EP-A- 0 041 299**
**EP-A- 0 129 293**
**EP-A- 0 206 674**
**US-A- 3 210 197**

**M.W. FORMO et al.: "Bailey's industrial oil and fat products", vol. 1, 4th edition, 1979, J. WILEY & SONS, N.Y., pages 19-21**

(73) Proprietor: **UNILEVER PLC**
**Unilever House Blackfriars P.O. Box 68**
**London EC4P 4BO(GB)**

(84) Designated Contracting States:
**GB**

(73) Proprietor: **UNILEVER N.V.**
**Burgemeester s'Jacobplein 1 P.O. Box 760**
**NL-3000 DK Rotterdam(NL)**

(84) Designated Contracting States:
**BE CH DE ES FR GR IT LI NL SE AT**

(72) Inventor: **Bennets, Alastair Leslie**
**55 Fourteenth Street Parkhurst 2193**
**Johannesburg(ZA)**
Inventor: **Robinson, David John**
**Verwersdijk 81**
**NL-2611 NE Delft(NL)**

(74) Representative: **Litherland, Donald et al**
**UNILEVER PLC Patent Division Colworth House Sharnbrook**
**GB-Bedford MK44 1KO(GB)**

Rank Xerox (UK) Business Services

## Description

This invention relates to plastic fat-continuous emulsion food products such as margarine which are particularly intended for table purposes and their preparation.

In our British patent specification no. 8515171 margarine and related fat products are described for culinary purposes for example pastry margarine, which are customarily marketed in wrapped blocks of substantial size and which are pre-sliced and wrapped together to form a unitary package from which individual slices can be removed as required.

The melting characteristics, expressed as N-values obtained by NMR methods of the pastry fat products disclosed in the above patent specification are as follows:-
N20 30-60, preferably 46-50; N30 12-40, preferably 27-32 and N35 8-30, preferably 16-20. The hardness, measured by penetrometer as C-values in accordance with Haighton JAOCS 36 (1959) pp 345 to 348, should preferably be between 800 and 3500, more particularly 1500 and 3500. A suitable composition comprises for example, a mixture preferably in equal parts, of palm oil with selectively hardened palm oil having a slip melting point of 40-50°C, the mixture being blended with a minor amount of sunflower or other high PUFA oil. Palm stearine fraction from palm oil may be used instead of or in addition to hardened palm oil as the hardstock fat, which may also include hardened fish oil.

The compositions conforming to these requirements, while satisfactory for baking and other culinary purposes for which special characteristics of the product may be required in such operations, in which the fat product is used as an ingredient in recipes, is less well-suited for table purposes in which the product is used directly as a food spread for which, in addition to spreadability, the product must also meet critical mouthfeel requirements less critical in pastry fats. It has now been found that margarine and like fat-continous emulsion food spreads suitable as spreads, may be provided in the form of a sliced block from which individual slices may be removed as required.

The present invention therefore provides a fat-continuous emulsion food spread comprising a sliced block in which individual slices in contact with one another form a unitary package the consistency of which enables individual slices to be readily parted from the package, wherein the fat is selected from a blend of sunflower or soya bean oil and palm oil, which are at least partly selectively hardened to a slip melting point of 30-45°C, while the solids content of the fat component measured by NMR methods is from 12 to 28 particularly 24-26 at 20°C, less than 60, particularly 50 or less at 10°C and less than 8, particularly less than 5 at 35°C, and the hardness measured by C values is below 1500 at 10°C.

It is surprising that the substantially softer compositions of the present invention nevertheless are of sufficient integrity when sliced to be separable from the unitary block of which they form part, at normal ambient temperatures up to 20°C.

The solids content of the fat component in the products of the invention is preferably less than 45 at 10°C,17-20 at 20°C, less than 12 and more particularly less than 6 at 30°C and below 1.5 at 35°C. More especially the C value at 20°C is above 275 and below 1500 at 10°C.

The fat composition preferably consists of major amounts, preferably about three quarters or more of the total fat content, of sunflower and palm oils, more preferably more sunflower than palm oil and at least part of which oils are hardened. Preferably the palm oil is a lower melting fraction consisting substantially of mono palmityl di-unsaturated and tri-unsaturated glycerides. The hardened sunflower and/or palm oil exhibit slip melting point from 30 to 45°C. Where both are hardened preferably the hardened palm oil exhibits the highest slip melting point. Part or all of the sunflower oil may be replaced by soya bean oil.

Any further oil or fat present preferably comprises a lauric fat, preferably palm kernel or coconut oil, preferably present in an amount not more than about one quarter of the total fat content.

The sliced margarine fat blocks of the present invention may be provided by a simple modification of established extrusion methods for the preparation of margarine, in which the margarine is extruded in a block past cutting wires fixed across the extrusion path of the block and spaced apart, preferably from 1 to 5 cm between them. The cutting installation is preferably installed adjacent the mouthpiece or exit port of the extrusion unit, ensuring that no further pressure is applied by the units to force the slices together and handicap the separation from the package in which they are ultimately wrapped. Preferably also, the margarine is extruded through a unit which is substantially rectangular in cross section but which is furnished with scalloped edges between the walls and adjacent cutting wires, providing each slice of margarine with an indented edge to facilitate its separation from its adjacent neighbours. Preferably the feed rate of the margarine to the cutting zone is from 10 to 100 cm/sec.

A particular advantage of the present invention is that conventional methods of margarine manufacture in which the product is extruded, may be inexpensively adapted to produce these products. Margarine and similarly emulsion-continuous fat products, are usually produced in a continuous fashion, from aqueous emulsions in the fully-melted fat, which are subjected to rapid chilling and working in scraped-surface heat exchanger units or Votator A units, from which the now-plastic emulsion is discharged into Votator B units constituted by a pipe which may include texturising valve means, in which further crystallisation of the fat in the emulsion occurs and from which the margarine is finally extruded and cut into blocks for wrapping. A cutting frame comprising spaced parallel cutting wires as described or cutting knives can be simply fitted over the extrusion orifice to provide the sliced margarine packs of the present invention is needed, with no further expensive modification, either of the extrusion machinery or the successive wrapping facility, which handles the sliced pack just as readily.

Preferably the slices constituting the packs of the present invention are between 10 and 100 mm thick, preferably from 20 to 30 mm thick. Blocks may be formed with any number, but for convenience blocks of 3 or 4 slices are preferred. The packaged block, with or without intermediate wrapping with parchment or other grease proof materials, is preferably arranged with the slices upright, to ensure that the pressure of stacking for example on palettes, is transverse to the slices and does not therefore tend to press adjacent slices together. The cross-sectional shape and size of the block are not critical. It may be rounded or rectangular in section, preferably at least 5 cm across, more preferably less than 25 cm and especially rectangular blocks having sides from 7 cm to 30 cm in length. Preferably also the block is scored with peripheral grooves or rills at intervals along the block over adjacent slices to facilitate their separation by hand as required. It is desirable that the fat in the margarine product is substantially fully crystallised before being sliced.

## Claims

1. A fat continuous plastic emulsion food product, comprising a sliced block in which individual slices in contact with one another form a unitary package the consistency of which enables individual slices to be readily parted from the package at ambient temperatures, wherein the fat is selected from a blend of sunflower or soya bean oil and palm oil, which are at least partly selectively hardened to a slip melting point of 30-45°C, while the solids content of the blend is from 12-28 at 20°C, less than 60 at 10°C and less than 8 at 35°C, and the C-value of the fat is below 1500 at 10°C.

2. A product according to claim 1 wherein the solids content of the fat is less than 5 at 35°C.

3. A product according to Claim 1 or 2 wherein the slices are from 10 to 100 mm thickness.

4. A product according to claim 1, 2 or 3 wherein the block is at least 5 cm across.

5. A product according to Claim 4 wherein the block is rectangular in section.

6. A product according to Claim 5 wherein each side of the block is 7 cm to 30 cm in length.

7. A product according to any of the preceding claims wherein the block is scored peripherally with grooves or rills between adjacent slices to facilitate their separation.

8. A product according to any of the preceding claims wherein the solids content of the fat is:
   N10 :     below 45
   N20 :     17-20
   N30 :     below 6
   N35 :     below 1.5

9. A product according to any of the preceding claims wherein the C value hardness of the block is more then 275 at 20°C and below 1500 at 10°C.

10. A product according to any of the preceding claims wherein the fat contains up to about one quarter its weight of lauric fat.

11. A product according to any of the preceding claims wherein the fat is substantially completely crystallised.

12. A process for the preparation of a product as claimed in any of the preceding claims comprising preparing a water-in-oil emulsion from a blend of hardened and unhardened sunflower or soya bean oil and palm oil, chilling, working and if necessary resting the plastic emulsion product obtained until crystallisation is substantially complete, slicing and wrapping the plastic emulsion product obtained in predetermined lengths, each providing a unitary package in which slices are in contact with one another and are readily separable, the block being scored peripherally at intervals between the slices to facilitate their separation in use.

## Patentansprüche

1. Fettkontinuierliche plastische Emulsion eines Nahrungsmittelproduktes, umfassend:
   einen in Scheiben geschnittenen Block, in dem einzelne Scheiben, die miteinander in Kontakt stehen, eine einheitliche Packung bilden, deren Konsistenz es ermöglicht, daß sich einzelne Scheiben bei Umgebungstemperaturen leicht von der Packung abtrennen lassen, worin das Fett aus einem Gemisch aus Sonnenblumen- oder Sojaöl und Palmöl ausgewählt ist, wobei die Öle mindestens teilweise selektiv auf einen Steigschmelzpunkt von 30 - 45°C gehärtet sind, während der Feststoffgehalt des Gemisches bei 20°C zwischen 12 und 28 liegt, bei 10°C kleiner als 60 und bei 35°C kleiner als 8 ist und der C-Wert des Fettes bei 10°C kleiner als 1500 ist.

2. Produkt nach Anspruch 1, worin der Feststoffgehalt des Fettes bei 35°C kleiner als 5 ist.

3. Produkt nach Anspruch 1 oder 2, worin die Scheiben eine Dicke von 10 bis 100 mm aufweisen.

4. Produkt nach Anspruch 1, 2 oder 3, worin der Block eine Breite von mindestens 5 cm besitzt.

5. Produkt nach Anspruch 4, worin der Block im Querschnitt rechteckig ist.

6. Produkt nach Anspruch 5, worin jede Seite des Blockes eine Länge von 7 bis 30 cm aufweist.

7. Produkt nach irgendeinem der vorangegangenen Ansprüche, worin der Block am Rand zwischen benachbarten Scheiben durch Vertiefungen oder Rillen eingekerbt ist, um die Trennung der Scheiben zu erleichtern.

8. Produkt nach irgendeinem der vorangegangenen Ansprüche, worin der Feststoffgehalt des Fettes wie folgt ist:

   N10 :  unter 45
   N20 :  17 bis 20
   N30 :  unter 6
   N35 :  unter 1,5.

9. Produkt nach irgendeinem der vorangegangenen Ansprüche, worin der C-Härtewert des Blockes bei 20°C größer als 275 und bei 10°C kleiner als 1500 ist.

10. Produkt nach irgendeinem der vorangegangenen Ansprüche, worin das Fett bis zu etwa 1/4 seines Gewichts Laurinfett enthält.

11. Produkt nach irgendeinem der vorangegangenen Ansprüche, worin das Fett im wesentlichen vollständig kristallisiert ist.

12. Verfahren zur Herstellung eines Produktes nach irgendeinem der vorangegangenen Ansprüche, umfassend:
Herstellen einer Wasser-in-Öl-Emulsion aus einem Gemisch aus gehärtetem und nicht gehärtetem Sonnenblumen- oder Sojaöl und Palmöl, Abkühlen, Bearbeiten und, wenn nötig, Ruhenlassen des erhaltenen formbaren Emulsionsproduktes, bis die Kristallisation im wesentlichen vollständig ist, Inscheibenschneiden und Einwickeln des erhaltenen formbaren Emulsionsproduktes in vorbestimmte Längen, wobei jeweils eine einheitliche Packung bereitgestellt wird, in der die Scheiben miteinander in Kontakt stehen und leicht trennbar sind, und wobei der Block am Rand zwischen den Scheiben periodisch eingekerbt wird, um bei Verwendung deren Trennung zu erleichtern.

## Revendications

1. Produit alimentaire en émulsion plastique continue de graisse, comprenant un bloc coupé en tranches dont les tranches individuelles en contact les unes avec les autres forment une motte unitaire dont la consistance permet de séparer aisément les tranches individuelles à partir de la motte à des températures ambiantes, dans lequel la graisse est choisie parmi un mélange d'huile de tournesol ou d'huile de soja et d'huile de palme, qui sont au moins partiellement durcies sélectivement jusqu'à un point de fusion de glissement de 30 à 45°C, alors que la teneur en solides du mélange est 12 à 28 à 20°C, inférieure à 60 à 10°C et inférieure à 8 à 35°C et la valeur C de la graisse est inférieure à 1500 à 10°C.

2. Produit selon la revendication 1, dans lequel la teneur en solides de la graisse est inférieure à 5 à 35°C.

3. Produit selon la revendication 1 ou 2, dans lequel les tranches ont une épaisseur de 10 à 100 mm.

4. Produit selon la revendication 1, 2 ou 3, dans lequel la dimension transversale du bloc est d'au moins 5 cm.

5. Produit selon la revendication 4, dans lequel le bloc est de section rectangulaire.

6. Produit selon la revendication 5, dans lequel chaque côté du bloc est d'une longueur de 7 à 30 cm.

7. Produit selon l'une quelconque des revendications précédentes, dans lequel le bloc est incisé suivant sa périphérie par des rainures ou entailles entre les tranches adjacentes pour en faciliter la séparation.

8. Produit selon l'une quelconque des revendications précédentes, dans lequel la teneur en solides de la graisse est :
   N10 : au dessous de 45
   N20 : 17 à 20
   N30 : au dessous de 6
   N35 : au dessous de 1,5

9. Produit selon l'une quelconque des revendications précédentes, dans lequel la valeur C de dureté du bloc est supérieure à 275 à 20°C et inférieure à 1500 à 10°C.

10. Produit selon l'une quelconque des revendications précédentes, dans lequel la graisse contient jusqu'à 1/4 de son poids de graisse laurique.

11. Produit selon l'une quelconque des revendications précédentes, dans lequel la graisse est à peu près entièrement cristallisée.

12. Procédé de préparation d'un produit selon l'une quelconque des revendications précédentes, qui consiste à préparer une émulsion eau-dans-huile à partir d'un mélange d'huile de tournesol ou de soja et d'huile de palme durci et non durci, à réfrigérer, à traiter et, éventuellement, à laisser reposer le produit en émulsion plastique obtenu jusqu'à l'achèvement pratique de la cristallisation, à couper en tranches et à envelopper le produit d'émulsion plastique obtenu en des longueurs prédéterminées, chacun formant un emballage unitaire dans lequel les tranches sont en contact les unes avec les autres et sont facilement séparables, le bloc étant incisé suivant sa périphérie à intervalles entre les tranches pour en faliciter la séparation en utilisation.